# EUROPEAN PATENT SPECIFICATION

(11) **EP 3 010 242 B1**
(45) Date of publication and mention of the grant of the patent: **22.01.2020**
(21) Application number: 15188209.9
(22) Date of filing: 02.10.2015
(51) Int. Cl.: H04N 21/436, H04N 21/45, H04N 21/485

(54) **DISPLAY DEVICE, SERVER AND CONTROLLING METHOD OF DISPLAY DEVICE**
ANZEIGEVORRICHTUNG, SERVER UND STEUERUNGSVERFAHREN EINER ANZEIGEVORRICHTUNG
DISPOSITIF D'AFFICHAGE, SERVEUR ET PROCÉDÉ DE COMMANDE DE DISPOSITIF D'AFFICHAGE

(30) Priority: 15.10.2014 KR 20140138841
(43) Date of publication of application: 20.04.2016
(73) Proprietor: Samsung Electronics Co., Ltd., Gyeonggi-do 16677 (KR)
(72) Inventor: KIM, Jae Seong, Gyeonggi-do (KR); LEE, Dong Hoon, Gyeonggi-do (KR); LEE, Young Jin, Gyeonggi-do (KR); YOO, Hye Kyoung, Gyeonggi-do (KR)
(74) Representative: Walaski, Jan Filip

(56) References cited:
- US-A1- 2008 162 629
- US-A1- 2009 083 401
- US-B1- 6 993 134
- US-B2- 8 527 579

## Description

The present invention relates to a display device outputting an image, a server connected to the display device, and a control method of the display device.

A display device is configured to output an image in a virtual manner and in a three dimensional manner.

The display device may have a function of displaying an image by receiving a broadcast signal from an image transmission apparatus, such as a broadcasting station, or a broadcast server. For example, the display device may individually receive an analog and digital broadcast signal according to channel selection by using a single turner, or may individually or simultaneously receive an analog and digital broadcast signal by using multi turners.

The display device includes one or more modules performing different function from each other to provide an image to a user by receiving a broadcast signal, and the quality of the image provided to the user varies according to setting of each module.

US8527579B2 relates to a setting information sharing system comprising a server device and client devices.

US 8 527 579 B2 describes a setting information sharing system comprising a server device and client devices.

Therefore, it is an aspect of the present disclosure to provide a display device capable of optimizing setting of one or more modules included in the display device, and a control method of the display device.

It is another aspect of the present disclosure to provide a server capable of collecting a parameter of adjacent device to optimize setting of one or more modules included in a display device by receiving state information of the display device.

Additional aspects of the disclosure will be set forth in part in the description which follows and, in part, will be obvious from the description, or may be learned by practice of the disclosure.

In accordance with an aspect of the present invention, there is provided a display device according to claim 1.

In accordance with one aspect of the present disclosure, a display device provided with one or more modules includes a communication unit configured to transmit state information of the module to a server or an adjacent device or configured to receive a parameter set in the adjacent device from the server or the adjacent device, both of which receive the state information, and a controller configured to change a mode of the module according to the parameter.

The adjacent device may be included in the same group as the display device.

The adjacent device may be placed in the same area as the display device or may be the same model as the display device.

The controller may set priority of the parameter, and may change a mode of the module according to the priority.

The controller may set a parameter having a high frequency as a high priority.

The display device may further include a storage configured to store the parameter.

The controller may determine whether the display device is normally operated.

The controller may set a changed mode as a mode of the each module when the display device is normally operated, and may change a mode of the each module according to the next priority when the display device is not normally operated.

The communication unit may receive a parameter where priority is set, and the controller may change a mode of the module according to priority of the parameter.

The display device may further include an encryption unit configured to encrypt the state information, and the communication unit may transmit the encrypted state information.

The display device may further include a decryption unit configured to decrypt encrypted parameter, and the communication unit may receive the encrypted parameter.

The controller may determine whether the display device is normally operated, and the communication unit may transmit the state information when the display device is not normally operated.

The display device may further include a storage configured to store a plurality of parameters and mode information indicated by the plurality of parameters, and the display device may share the mode information with the server.

In accordance with another aspect of the present disclosure, a server includes a communication unit configured to receive state information from a display device, and a controller configured to collect a parameter set in an adjacent device of the display device transmitting the state information, wherein the communication unit may transmit the parameter to the display device.

The controller may set priority of the parameter, and the communication unit may transmit a parameter where priority is set.

The server may further include a storage configured to store a plurality of parameters and mode information indicated by the plurality of parameters, and the display device may share the mode information with the display device.

In accordance with another aspect of the present disclosure, a control method of a display device includes transmitting state information of the display device, receiving a parameter set in an adjacent device from a server or the adjacent device, both of which receive the state information, and changing a mode of the module according to the parameter.

The changing of a mode may include setting priority of the parameter and changing a mode of the module according to the priority.

The control method may further include determining whether the display device is normally operated.

The control method may further include setting a changed mode as a mode of the each module when the display device is normally operated, and changing a mode of the each module according the next priority when the display device is not normally operated.

These and/or other aspects of the disclosure will become apparent and more readily appreciated from the following description of the embodiments, taken in conjunction with the accompanying drawings in which:
FIG. 1 is view illustrating a display device according to an embodiment of the present disclosure;
FIGS. 2 and 3 are schematic diagrams illustrating a relation between a display device and a server;
FIG. 4 is an external view illustrating a display device according to an embodiment of the present disclosure;
FIG. 5 is a control diagram of a display device;
FIG. 6 is a view illustrating information related to adjacent devices and a parameter which is set in the adjacent devices, wherein the information and the parameter are received by a communication unit;
FIG. 7 is an example of each parameter where a priority is set, received by a communication unit;
FIG. 8 is a control block diagram of a server;
FIG. 9 is an example of a server receiving state information and parameter of adjacent devices;
FIG. 10 an example of a server transmitting a parameter to a display device;
FIG. 11 is a flowchart illustrating a control method of a display device;
FIG. 12 is a flowchart illustrating a control method of a server; and
FIG. 13 is a flowchart illustrating another control method of a display device.

Hereinafter a display device, a server, and a control method of the display device according to embodiments will be described in detail with reference to the accompanying drawings.

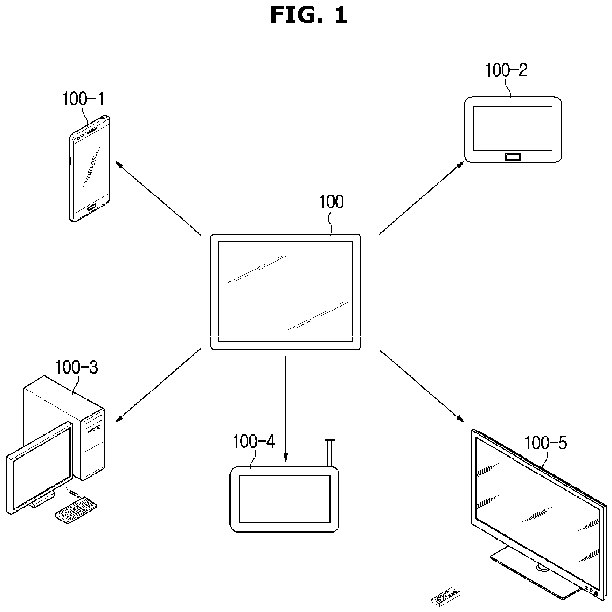

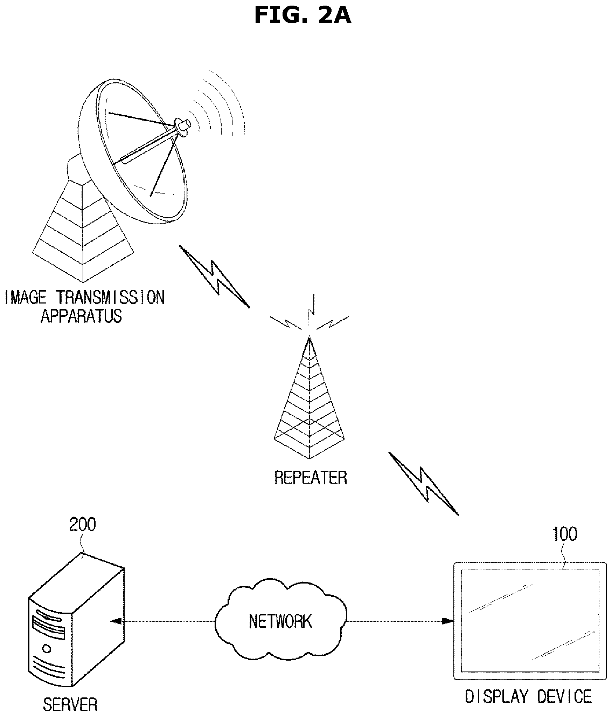

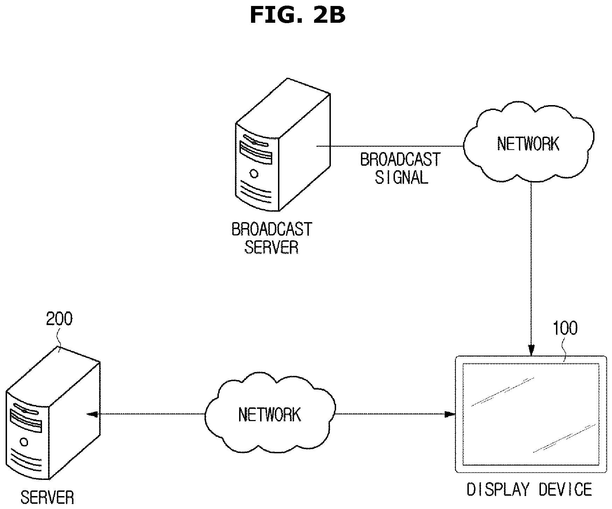

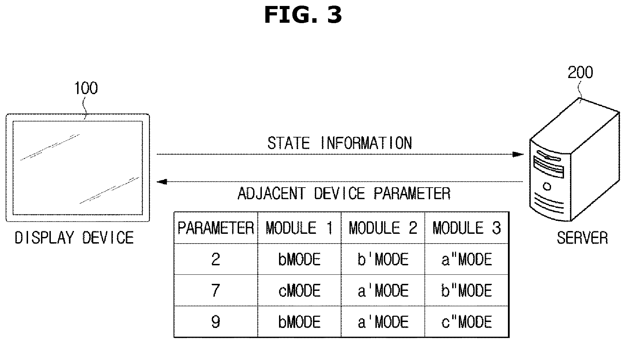

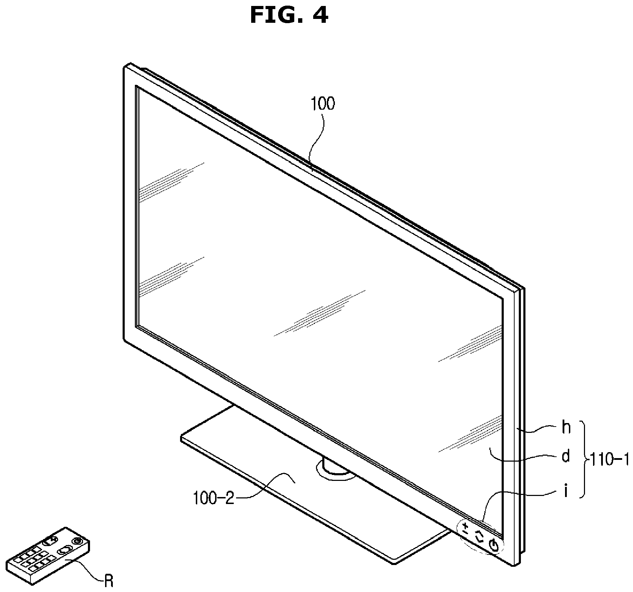

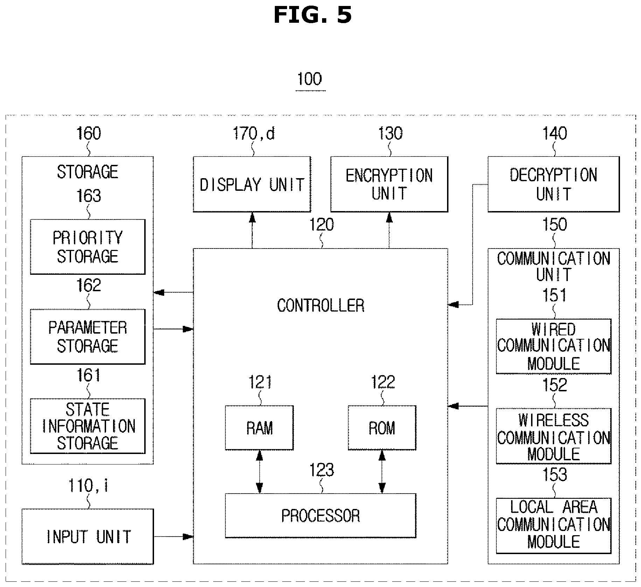

FIG. 1 is view illustrating a display device 100 according to an embodiment of the present disclosure, FIGS. 2 and 3 are schematic diagrams illustrating a relation between the display device 100 and a server 200, FIG. 4 is an external view illustrating the display device 100 according to an embodiment of the present disclosure, and FIG. 5 is a control diagram of the display device 100.

The display device 100 is a device configured to display an image, and thus the display device 100 may display an image by receiving a broadcast signal transmitted from a broadcasting station. For example, the display device 100 may display an image by receiving an analog and digital broadcast signal individually according to channel selection by using a single turner. Alternatively, the display device 100 may display an image by receiving an analog and digital broadcast signal individually or simultaneously by using multi turners. The display device 100 is capable of outputting sound as well as displaying an image. Herein, the sound may be outputted through a device provided on the outside of the display device.

Referring to FIG. 1, the display device 100 may be implemented by a portable terminal 100-1 and100-4, a computer 100-2 and100-3 or an analog or a digital TV 100-5. The portable terminal 100-1 and 100-4 may be configured to secure a portability and a mobility, and may include all kinds of handheld based devices such as Personal Communication System (PCS), Global System for Mobile communications (GSM), Personal Digital Cellular (PDC), Personal Handy phone System (PHS), Personal Digital Assistant (PDA), International Mobile Telecommunication (IMT)-2000, Code Division Multiple Access (CDMA)-2000, W-Code Division Multiple Access (W-CDMA), Wireless Broadband Internet (WiBro) terminal, Portable Multimedia Player (PMP) terminal 100-4, and Smart Phone, 100-1. The computer may include a notebook computer, a desktop 100-3, a tablet Personal Computer (PC) 100-2, a slate PC, and a smart TV, wherein WEB browser is loaded in all of those. The TV may include a digital TV 100-5, standard definition TV (SDTV) and high definition TV (HDTV).

Referring to FIG. 2, the display device 100 may receive an analog broadcast signal (e.g., terrestrial broadcast signal, cable broadcast signal, and satellite broadcast signal) from an image transmission apparatus via a repeater, as illustrated in FIG. 2A, or may receive a digital broadcast signal (e.g., broadcast signal of Internet Protocol television (IPTV)) from the server 200 to display an image to a user.

The display device 100 may be connected to the server 200 individually provided or another display device via a network, and may receive a parameter, which is required for control of various module, from the server 200 or another display device. Hereinafter a case in which the display device 100 transmits state information to the server 200, and receives a parameter from the server 200 will be described as an example, but is not limited thereto. The display device 100 may transmit state information to another display device or may directly receive a parameter from another display device.

Particularly, referring to FIG. 3, the display device 100 may transmit each state information of various module included in the display device 100 to the server 200 to report the condition of each module to the server 200, wherein the each module may be currently included in the display device 100.

The state information may include information related to at least one of Signal to Noise Ratio (SNR), Bit Error Rate (BER), lock time (e.g., synchronization lock, equalizer lock, Forward Error Corrector (FEC) lock, and master lock time), modulation/code rate, interleaver mode, Number of iteration, Transport Stream (TS) packet data, channel profile, Carrier Recovery (CR) feature, Symbol Timing Recover (STR) feature, phase variation recovery feature, loop filter feature, Guard Interval (GI), Fast Fourier Transform (FFT), Radio Frequency (RF) signal, channel state information (CSI), and reset.

The server 200 receiving the state information may transmit a parameter to the display device 100 to control each module of the display device 100 based on the received state information.

The parameter may correspond to mode information indicating mode of each module, wherein the each module is one or more. For example, the parameter may be indicated by a number, character or symbol. Mode information indicated by parameter may be shared with the display device 100 and the server 200. For example, as for parameter 2, the display device 100 and the server 200 may share mode information indicating b mode corresponding to module 1, b' mode corresponding to module 2, and a' mode corresponding to module 3. That is, when the server 200 transmits only parameter 2 to the display device 100, the display device 100 may recognize mode of module 1, module 2, and module 3, respectively.

Mode may indicate a state in which a circuit feature of each module is set to a certain value. For example, synchronization feature, such as Carrier Recovery (CR) feature, Symbol Timing Recover (STR) feature, phase variation recovery feature and loop filter feature, equalization feature, Forward Error Correction (FEC) feature may be set to a certain value.

Hereinafter parameter of adjacent devices, as illustrated in FIG. 3, will be described as an example of parameter.

The mode may be indicated by a mode, b mode, or c mode. a mode may represent a state in which CR feature is set to x1, STR feature is set to y1, and phase variation recovery feature is set to z1. b mode may represent a state in which CR feature is set to x2, STR feature is set to y2, and phase variation recovery feature is set to z2. c mode may represent a state in which CR feature is set to x3, STR feature is set to y3, and phase variation recovery feature is set to z3.

The display device 100 or any one component of the display device 100 may include module 1, module 2, and module 3. A control operation of the module 1 may be determined by any one of a mode, b mode, and c mode. A control operation of the module 2 may be determined by any one of a' mode, b' mode, and c' mode. A control operation of the module 3 may be determined by any one of a" mode, b" mode, and c" mode.

Parameter 2 may be mode information indicating b mode corresponding to module 1, b' mode corresponding to module 2, and a' mode corresponding to module 3. Parameter 7 may be mode information indicating c mode corresponding to module 1, a' mode corresponding to module 2, and b" mode corresponding to module 3. Parameter 9 may be mode information indicating b mode corresponding to module 1, a' mode corresponding to module 2, c" mode corresponding to module 3.

When the display device 100 sets mode of each module according to parameter 2, the display device 100 may set module 1 to b mode, may set module 2 to b' mode, and may set module 3 to a" mode.

Meanwhile, mode of each module may represent a state in which synchronization feature, such as CR feature, STR feature, phase variation recovery feature and loop filter feature, equalization feature, and Forward Error Correction (FEC) feature are set to a certain value.

As mentioned above, since the display device 100 may set module 1 to b mode by receiving parameter 2, the display device 100 may set CR feature to x2, may set STR feature to y2, and may set phase variation recovery feature to z2 in module 1. The display device 100 may set a circuit characteristic according to a mode represented by parameter 2 in module 2 and 3.

Hereinafter for the convenience of the description, a display device 100 implemented by a digital TV as illustrated in FIG. 4 will be described as an example.

As illustrated in FIG. 4, the display device 100 may include a body 100-1 and a stand 100-2 mounted to a lower end of the body 100-1 to support the body 100-1. The body 100-1 of the display device 100 may be installed on a wall by using a bracket.

The body 100-1 of the display device 100 may include a housing h, a display unit d provided inside the housing h to display an image, and an input unit i provided in the housing h to input an operation command.

The input unit i may be implemented by a power button, a channel up/down button, and a volume up/down button, as illustrated in the drawings, but is not limited thereto. Particularly, the input unit i may be configured with a key pad, a dome switch, a touch pad, and the likes, all of which are configured to receive an input of a command and information by push or touch motion by a user. In addition, the input unit i may be configured with a jog wheel or a jog method to rotate a key, a manipulation method such as a joy stick, or a finger mouse.

The display device 100 may receive an operation command by a user inputted via a remote controller R, and may perform an operation based on the received command.

The operation command of a user inputted via the remote controller R may include a channel change command, a channel select command, a volume change command, and the likes.

That is, the remote controller R may include a plurality of buttons such as a power on/off button, a channel up/down button, a volume up/down button, a number button, a confirmation button, a direction button, a function select button, a content play/ stop button, and the likes. The remote controller R may be a device to perform a communication with the display device 100, and may transmit a button signal, which is manipulated by a user, to the display device 100. Herein, the manipulated button signal may correspond to an operation command of a user.

In this case, the remote controller R may be implemented by a button as well implemented by a key pad, a dome switch, a touch pad, a touch screen and the likes, all of which are to receive an input of a command and information by push or touch motion by a user. In addition, the remote controller R may be implemented by a jog wheel or a jog method to rotate a key, a manipulation method such as a joy stick, or a finger mouse. The touch screen may be implemented by a resistive touchscreen panel or a capacitive touchscreen panel. Otherwise, the touch screen may be implemented by a touch screen panel by using ultrasound or infrared light.

FIG. 5 is a control diagram of the display device 100 according to an embodiment, and the display device 100 may further include a controller 120 to control each component, an encryption unit130 to encrypt data, a decryption unit 140 to decrypt encrypted data, a communication unit 150 connected to a network, and a storage 160 to store data. In addition, the display device 100 may further include various modules to perform various control operations.

Hereinafter each component will be described in detail.

The input unit 110, i may receive an input of an operation command by a user, and may transmit a signal corresponding to the input operation command to the controller 120.

Particularly, when receiving an input of parameter request mode from a user, the input unit 110, i may operate a control program stored in the storage 160, described later.

In addition, the input unit 110, i may receive an input of a storage command from a user, may store a parameter received from the server 200, and may receive an input of various operation commands.

The display unit 170, d may display a video signal, which is included in a broadcast signal, as an image. The display unit 170, d may display an image having various qualities, which is various according to each module state included in the display device 100.

For example, as SNR of a broadcast signal, which is received by the communication unit 150, is lowered, and as BER of the broadcast signal is higher, the display unit 170, d may display an image having a low quality. In addition, when lock time of the communication unit 150 is not detected or when lock time is out of a critical range, the display unit 170, d may display an image having a low quality.

Herein SNR may represent a ratio of a normal signal to a noise, BER may represent the number of bits, in which an error is generated during the transmission, over the number of bits, and lock time may represent a period of time, which is taken to process by any single module.

The display unit 170,d may be implemented by plasma display panel (PDP), light emitting diode (LED) or liquid crystal display (LCD). In addition, the display unit 170, d may use a three dimensional display configured to display a three dimensional image. The display unit 170, d may include a touch screen. When the display unit 170, d includes the touch screen, the display unit 170, d may perform a function of the input unit 110, i, as mentioned above. The touch screen may be implemented by a resistive touchscreen panel or a capacitive touchscreen panel. Otherwise, the touch screen may be implemented by a touch screen panel by using ultrasound or infrared light.

The communication unit 150 may receive a broadcast signal by connecting to a broadcast transmission apparatus, a repeater or a broadcast server via a network, or may transmit/receive state information or parameter by connecting to the server 200 or another display device.

Hereinafter a case in which the display device 100 is connected to "the server 200" will be described as an example, but is not limited thereto. The display device 100 may be directly connected to "another display device, which is included in the same group". Another display device included in the same group will be described later.

Particularly, the communication unit 150 may transmit state information of the display device 100 to the server 200 via a network.

For example, when the controller 120 is implemented by a semiconductor (hereinafter referring to channel chip) configured to convert received broadcast signal into a digital signal, the communication unit 150 may transmit state information related to one or more modules included in a channel chip, e.g., synchronization module, equalizer module, and Forward Error Corrector module, to the server 200, wherein the state information may include information related to at least one of Signal to Noise Ratio (SNR), Bit Error Rate (BER), lock time, e.g., synchronization lock, equalizer lock, Forward Error Corrector (FEC) lock, and master lock time), modulation/code rate, interleaver mode, Number of iteration, Transport Stream (TS) packet data, channel profile, Carrier Recovery (CR) gain, Symbol Timing Recover (STR) gain, CR offset, STR offset, Guard Interval (GI), Fast Fourier Transform (FFT) size, Radio Frequency (RF) signal, channel state information (CSI), and reset.

However, the transmitted state information is not limited to state information related to module included in a channel chip, and may include state information related to a module of the display device 100 or a module of another component included in the display device 100.

Meanwhile, the communication unit 150 may transmit state information, which is encrypted by the encryption unit 130 described later.

When a user inputs a parameter request mode, the communication unit 150 may transmit state information to the server 200.

When the communication unit 150 detects an abnormal operation of the display device 100, the communication unit 150 may transmit state information to the server 200. For example, when SNR is equal to or lower than a critical value, BER is equal to or higher than a critical value, lock time is not detected, lock time is out of a critical range, and an abnormal value in other state information is detected, the communication unit 150 may transmit state information.

The communication unit 150 may receive parameter of another display device, which is included in the same group as the display device 100, from the server 200.

Another display device included in the same group as the display device 100 may represent a plurality of display devices located in the same area as the display device 100, and a plurality of display devices, which is the same model as the display device 100.

The area may be classified by geographical features, e.g., mountains, and under earth, of the location where the display device 100 is placed, or by a distance from the display device 100.

The model may be classified by a model number.

For example, when the display device 100 is located in any mountain region, another display device included in the same group may represent a plurality of display devices located in the same mountain region.

Alternatively, another display device included in the same group may represent a plurality of display devices located within a radius of 10 km from the display device 100.

Alternatively, another display device included in the same group may represent a plurality of display devices having the same model number as the display device 100.

Meanwhile, the communication unit 150 may receive information related to another display device included in the same group, together with a parameter set in another display device included in the same group from the server 200.

Hereinafter another display device included in the same group will be referred to as "adjacent devices".

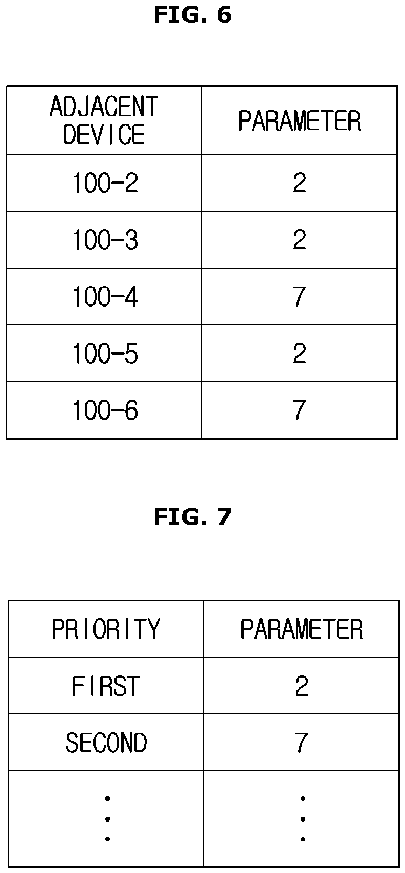

FIG. 6 is a view illustrating information related to adjacent devices and a parameter which is set in the adjacent devices, wherein the information and the parameter are received by a communication unit 150.

Referring to FIG. 6, the communication unit 150 may receive a model number of adjacent devices (100-1, 100-2, 100-3, 100-4, 100-5, 100-6), as information of the adjacent devices, and may receive a parameter (2, 2, 7, 2, 7) set in the adjacent devices together. In this case, the controller 120, described later, may give or set priority to the received parameter, and may change mode of each module according to the priority.

Meanwhile, the communication unit 150 may receive a plurality of parameters where priority is pre-set, from the server 200.

FIG. 7 is an example of each parameter where a priority is set, received by the communication unit 150.

Referring to FIG. 7, the communication unit 150 may receive parameter 2 having "the first" priority, and parameter 7 having "the second" priority. The detail description of the priority will be described later with reference to the controller 120.

In addition, the communication unit 150 may receive a parameter, which encrypted by the server 200.

Referring to FIG. 5 again, a network may be implemented by a wired network, such as Local Area Network (LAN), Wide Area Network (WAN) or Value Added Network (VAN), or all types of wireless network, such as mobile radio communication network, or satellite communication network.

In order to communicate with a broadcast transmitter, a repeater, a broadcast server or the server 200 via such a network, the communication unit 150 may include any one of a wired communication module 151, a wireless communication module 152, and a local area communication module 153, or a combination of the wired communication module 151, the wireless communication module 152, and the local area communication module 153.

The wired communication module 151 may include a wired Ethernet. In a place where Access Point (AP, not shown) is installed, the wireless communication module 152 may be connected to AP by using a wireless communication. The wireless communication module 152 may support IEEE802. 11x of IEEE. The local area communication module 153 may include bluetooth, bluetooth low energy, Infrared Data Association (IrDA), Wi-Fi, Ultra Wideband (UWB) and Near Field Communication (NFC), and Zigbee.

The controller 120 may control an operation of the display device 100 by outputting a control signal controlling each component included in the display device 100.

The controller 120 may detect abnormal operation of the display device 100, and may operate a control program stored in the storage 160, when detecting the abnormal operation. The abnormal operation may include a case in which SNR of broadcast signal is equal to or lower than a critical value, a case in which BER is equal to or higher than a critical value, a case in which lock time is not detected, a case in which lock time is out of a critical range, or a case in which an abnormal value is detected in other state information. However, the operation of the control program may be performed by an input from a user (i.e., an input of parameter request mode).

When the control program is operated, the communication unit 150 may transmit state information to the server 200. The controller 120 may set priority of the received plurality of parameters when receiving a plurality of parameters, and may change a mode of each module according to a mode of one or more modules indicated by parameter having the highest priority.

For example, as illustrated in FIG. 6, when the communication unit 150 receives parameter 2 set in an adjacent device 100-2, parameter 2 set in an adjacent device 100-3, parameter 7 set in an adjacent device 100-4, parameter 2 set in an adjacent device 100-5, and parameter 7 set in an adjacent device 100-6, the controller 120 may give high priority to a parameter having a high reception frequency. In this case, the controller 120, as illustrated in FIG. 7, may set parameter 2 having the highest reception frequency to "the first" priority, and may set parameter 7 having the second -highest to "the second" priority.

However, when the communication unit 150 receives a plurality of parameters where priority is pre-set, from the server 200, a process of setting the priority may be omitted. A description of the process of setting the priority will be described later with reference to the server 200.

Subsequently, the controller 120 may change mode of modulei, module 2, and module 3, according to mode information (e.g., b mode corresponding to modulei, b' mode corresponding to module 2, and a" mode corresponding to module 3) indicated by parameter 2 having the highest priority (i.e., the first priority).

The controller 120 may determine whether the display device 100 is normally operated in a mode, wherein the mode is changed according a current priority (i.e., the first priority). When the display device 100 is normally operated, the controller 120 may set a mode that is changed according the current priority ((i.e., the first priority) to a mode of modulei, module 2, and module 3, and when the display device 100 is abnormally operated, the controller 120 may change a mode of modulei, module 2, and module 3, according to mode information (e.g., c mode corresponding to modulei, a' mode corresponding to module 2, and b" mode corresponding to module 3) indicated by parameter 7 having the second-highest priority (i.e., the second priority).

Likewise, the controller 120 may determine whether the display device 100 is normally operated in a mode, wherein the mode is changed according a current priority (i.e., the second priority). When the display device 100 is normally operated, the controller 120 may set a mode that is changed according the current priority ((i.e., the second priority) to a mode of modulei, module 2, and module 3, and when the display device 100 is abnormally operated, the controller 120 may change a mode of modulei, module 2, and module 3, according to mode information included in a parameter having the next-highest priority.

The determination of the normal operation may include a case in which SNR of broadcast signal is equal to or higher than a critical value, a case in which BER is equal to or lower than a critical value, and a case in which lock time is within a critical range.

Referring to FIG. 5 again, the controller 120 may include a processor 123, a Read only memory (ROM) 122 storing a control program to control the display device 100, and a Random access memory (RAM) 121storing a signal inputted from the outside of the display device 100 or data, and being used as a storage area corresponding to various operations performed in the display device 100.

In addition, the controller 120 may include a graphic process board (processing board; not shown) formed in a way that the processor 123, the RAM 121 and the ROM 122 are provided on a separated circuit board, which is electrically connected to the controller 120. The processor 123, the RAM 121 and the ROM 122 may be connected to each other via an internal bus. In addition, the controller 120 may be used as a term representing a component including the processor 123, the ROM 122, and the RAM 121. Alternatively, the controller 120 may be used as a term representing a component including the processor 123, the ROM 122, the RAM 121and the processing board (not shown).

The encryption unit 130 may encrypt state information of each module included in the display device 100. The encryption unit 130 may encrypt state information by using Data Encryption Standard (DES) in symmetric public-private key cryptosystem, RSA (Rivest, Shamir, Adleman) in asymmetric public-private key cryptosystem, or using various techniques.

The decryption unit 140 may decrypt encrypted parameter received from the server 200. The decryption unit 140 may decrypt encrypted parameter by using a technique corresponding to the technique used to encrypt the parameter by the server 200.

By the encryption of the state information and the parameter, the stability and the security of thereof may be secured.

The storage 160 may include a state information storage 161storring state information of each module in real time, a parameter storage 162 storing parameter received from the server 200, and a priority storage 163 storing priority of each module, which is set by the controller 120 or received from the sever 200.

The parameter storage 162 may store a plurality of parameters and mode of one or more modules indicated by a parameter, in a shape of a table, as illustrated in FIG. 3. Such a parameter and the mode of each module indicated by the parameter may be shared with the server 200.

In addition, the parameter storage 162 may store information about adjacent devices and parameters set in each adjacent device, in a shape of a table, as illustrated in FIG. 6.

The priority storage 163 may store priority of parameter, in a shape of a table, as illustrated in FIG. 7.

The storage 160 may be a component to store program and data related to the display device 100, and may include a program area and a data area. The program area may store control programs related to function operations of the display device 100. The data area may include the state information storage 161, the parameter storage 162, and the priority storage 163, and may store data generated by the use of the display device 100. The stored data may be outputted to a user via the display unit 170.

Meanwhile, in FIG. 5, the controller 120 is illustrated to include the ROM 122 storing a control program to control the display device 100, and the RAM 121storing a signal inputted from the outside of the display device 100 or data, and being used as a storage area corresponding to various operations performed in the display device 100, but is not limited thereto. The storage 160 may include RAM and ROM, and the storage 160 may be provided inside the display device 100 or implemented in a way of being inserted into the display device 100, as a portable device.

In addition, as illustrated in FIG. 5, the storage 160 may be implemented in a separated manner, or may be implemented to be inside the controller 120. In this case, the storage 160 may be implemented by being coupled to other components, which form the controller 120, on the same substrate or in the device.

Although not shown, the display device 100 may further include a sound unit outputting a sound included in an image, and the sound unit may be provided in the outside of the display device 100. The sound unit may perform sound guidance when a control program is operated.

Meanwhile, as above-described embodiments, a case in which the display device 100-1 transmits state information to the server 200, and receives a parameter from the server 200 is illustrated, but the display device 100-1 may directly transmit state information to adjacent devices 100-2, 100-3, 100-4, 100-5, 100-6 and may receive a parameter the adjacent devices 100-2, 100-3, 100-4, 100-5, 100-6.

In this case, each of adjacent devices 100-2, 100-3, 100-4, 100-5, 100-6 may receive state information from the display device 100-1, may detect an abnormal operation of the display device 100-1, and may transmit each parameter to the display device 100-1. The description thereof will be described later.

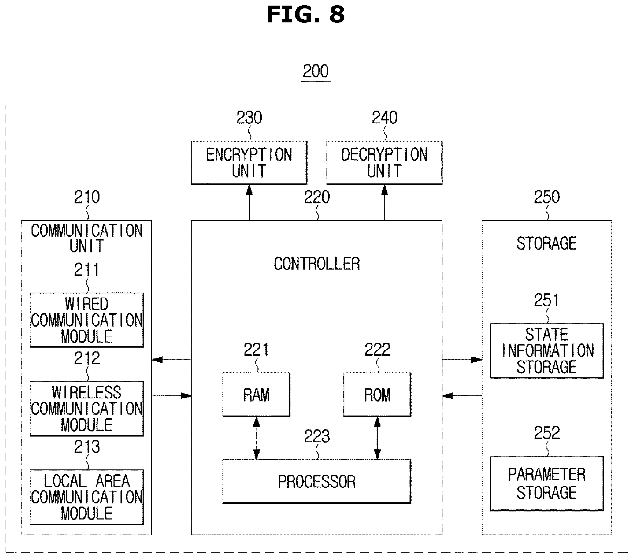

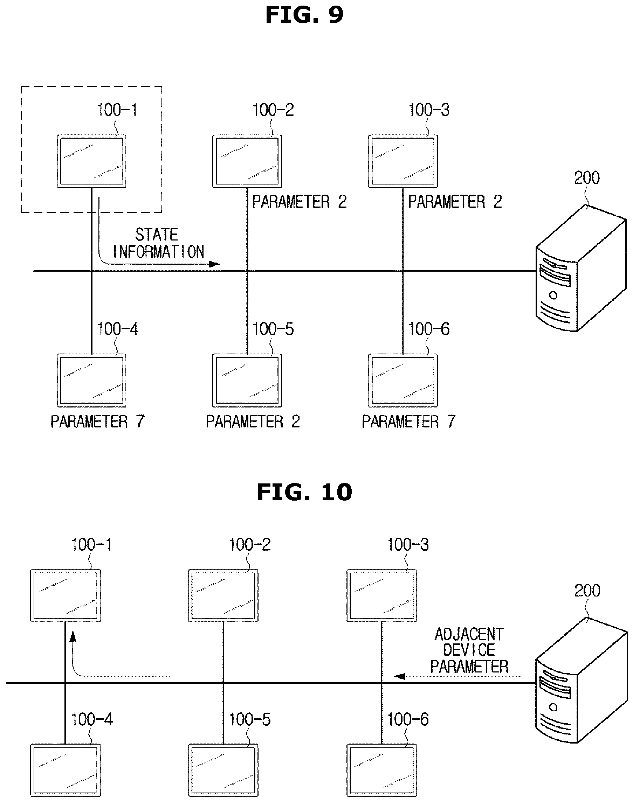

Hereinafter the server 200 connected to the display device 100 will be described with reference to FIGS. 8 to 10. FIG. 8 is a control block diagram of the server 200, FIG. 9 is an example of the server 200 receiving state information and parameter of adjacent devices, and FIG. 10 an example of the server 200 transmitting a parameter to the display device 100-1.

Referring to FIG. 8, the server 200 may include a communication unit 210 connected to a network, a controller 220 to control each component, an encryption unit 230 to encrypt data, a decryption unit 240 to decrypt encrypted data and a storage 250 to store data.

Hereinafter the detail description of each component will be described.

The communication unit 210 may be connected to the display device 100 via a network.

Particularly, referring to FIG. 9, the communication unit 210 may receive state information of any one display device 100-1 via a network.

In this case, the communication unit 210 may receive state information encrypted by the display device 100-1.

In addition, the communication unit 150 may receive a parameter set in another display device (hereinafter referring to adjacent devices) 100-2, 100-3, 100-4, 100-5, 100-6, which is included in the same group, e.g., the same area or the same model, as the display device 100-1 transmitting state information.

For example, referring to FIG. 9, the server 200 may receive parameter 2 from an adjacent device 100-2, an adjacent device 100-3 and an adjacent device 100-5, and may receive parameter 7 from an adjacent device 100-4 an adjacent device 100-5 and an adjacent device 100-6. Parameter 2 may be a parameter set in the adjacent device 100-2, the adjacent device 100-3 and the adjacent device 100-5, and parameter 7 may be a parameter set in the adjacent device 100-4, and the adjacent device 100-6.

In addition, referring to FIG. 10, the communication unit 210 may transmit parameter of the adjacent devices 100-2, 100-3, 100-4, 100-5, 100-6 to the display device 100-1 transmitting state information.

For example, the communication unit 210 may transmit parameter 2 set in the adjacent device 100-2, the adjacent device 100-3 and the adjacent device 100-5, and parameter 7 set in the adjacent device 100-4, and the adjacent device 100-6 to the display device 100-1.

In this case, the communication unit 210 may transmit parameter and also transmit information of the adjacent devices, in which the corresponding parameter is set, (e.g., model number of the adjacent devices) together.

Meanwhile, when the controller 220, described later, sets priority of each parameter, the communication unit 210 may transmit a plurality of parameter where priority is set, to the display device 100-1. The detailed description of the priority will be described later with reference to the controller 220.

The communication unit 210 may transmit parameter encrypted by the encryption unit 230, described later, to the display device 100-1.

Referring to FIG. 8 again, a network may be implemented by a wired network, such as Local Area Network (LAN), Wide Area Network (WAN) or Value Added Network (VAN), or all types of a wireless network, such as mobile radio communication network, or satellite communication network.

In order to communicate with a plurality of display device 100 via such a network, the communication unit 210 may include any one of a wired communication module 211, a wireless communication module 212, and a local area communication module 213, or a combination of the wired communication module 211, the wireless communication module 212, and the local area communication module 213.

The wired communication module 211 may include a wired Ethernet. In a place where Access Point (AP, not shown) is installed, the wireless communication module 212 may be connected to AP by using a wireless communication. The wireless communication module 212 may support IEEE802. 11x of IEEE. The local area communication module 213 may include bluetooth, bluetooth low energy, Infrared Data Association (IrDA), Wi-Fi, Ultra Wideband (UWB) and Near Field Communication (NFC), and Zigbee.

The controller 220 may output a control signal controlling each component included in the server 200 to control operations of the server 200.

The controller 220 may determine a group of the display device 100 based on the received state information. The group may be classified by an area, a model, or other standards.

For example, when the received state information includes information about a certain mountain area, the controller 220 may determine a group of the display device 100 as a group where adjacent devices placed in the certain mountain area are included.

In addition, when the received state information includes a model name A, the controller 220 may determine that a group of the display device 100 is a group including an adjacent device including a model name A.

The controller 220 may store state information, which is received from the display device 100, in the storage 250.

When the communication unit 210 receives a parameter of adjacent devices, the controller 220 may store the received parameter in the storage 250. The storage 250 will be described later.

When receiving state information from the display device 100, the controller 220 may collect the parameter of adjacent devices stored in the storage 250. The collected parameter may be transmitted to the display device 100 by the above-mentioned communication unit 210. In this case, the parameter and a mode of each module indicated by the parameter may be shared with the display device 100.

In above-mentioned embodiment, the display device 100 is described to set priority of a plurality of parameter transmitted from the communication unit 210, but according to another embodiment, the controller 220 included in the server 200 may set priority of each parameter.

For example, the controller 220 may set a high priority to a parameter having high frequency among parameters collected from the adjacent devices.

In this case, a plurality of parameter where priority is set may be transmitted by the communication unit 210.

For example, parameter 2 having the first priority, and parameter 7 having the second priority may be transmitted by the communication unit 210.

The controller 220 may include a processor 223, a ROM 222 storing a control program to control the server 200, and a RAM 221storing a signal inputted from the outside of the server 200 or data, and being used as a storage area corresponding to various operations performed in the server 200.

In addition, the controller 220 may include a graphic process board (processing board; not shown) formed in a way that the processor 223, the RAM 221 and the ROM 222 are provided on a separated circuit board, which is electrically connected to the controller 220. The processor 223, the RAM 221 and the ROM 222 may be connected to each other via an internal bus. In addition, the controller 220 may be used as a term representing a component including the processor 123, the ROM 122, and the RAM 121. Alternatively, the controller 220 may be used as a term representing a component including the processor 223, the ROM 222, the RAM 221and the processing board (not shown).

The encryption unit 230 may encrypt a parameter of the adjacent devices. The encryption unit 230 may encrypt the parameter by using Data Encryption Standard (DES) in symmetric public-private key cryptosystem, RSA (Rivest, Shamir, Adleman) in asymmetric public-private key cryptosystem, or using various techniques.

The decryption unit 240 may decrypt encrypted state information received from the display device 100. The decryption unit 140 may decrypt encrypted parameter by using a technique corresponding to the technique used to encrypt the state information by the display device 100.

The storage 250 may include a state information storage 251storing state information of each module received by the server 200, a parameter storage 252 storing the parameter received from the adjacent devices, wherein the parameter storage 252 may store a plurality of parameter and mode information indicated by and a parameter in a shape of a table, as illustrated in FIG. 3, and may store information of the adjacent devices and the parameter set in the adjacent devices, in a shape of a table, as illustrated in FIG. 6.

The storage 250 may be a component to store program and data related to the server 200, and may include a program area and a data area. The program area may store control programs related to function operations of the server 200. The data area may include the state information storage 251 and the parameter storage 252, and may store data generated by the use of the server 200.

Meanwhile, in FIG. 8, the controller 220 is illustrated to include the ROM 222 storing a control program to control the server 200, and the RAM 121storing a signal inputted from the outside of the server 200 or data, and being used as a storage area corresponding to various operations performed in the server 200, but is not limited thereto. The storage 250 may include RAM and ROM, and the storage 250 may be provided inside the server 200 or implemented in a way of being inserted into the server 200, as a portable device.

In addition, as illustrated in FIG. 8, the storage 250 may be implemented to be separated from the controller 220, or to be inside the controller 220. In this case, the storage 250 may be implemented by being coupled to other components, which form the controller 220, on the same substrate or in the device.

Meanwhile, in above-described embodiment, a case in which the server 200 receives sate information, detects an abnormal operation of any one display device 100-1, and transmits a parameter collected from adjacent devices 100-2, 100-3, 100-4, 100-5, 100-6 to the any one display device 100-1 is illustrated, but those process may be directly performed by the adjacent devices 100-2, 100-3, 100-4, 100-5, 100-6.

In this case, any one adjacent device 100-2 may receive state information from the display device 100-1, may detect an abnormal operation and may transmit a parameter of the adjacent device 100-2 to the display device 100-1.

Similarly, other adjacent devices 100-3, 100-4, 100-5, 100-6 may receive state information from the display device 100-1, may detect an abnormal operation, and may transmit each parameter to the display device 100-1.

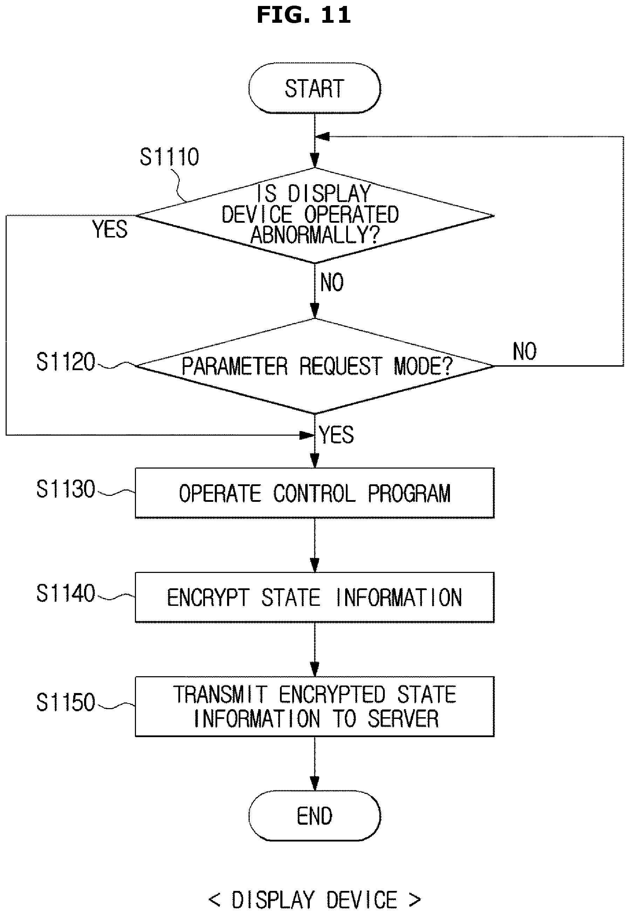

Hereinafter a control method of the display device 100 and the server 200 will be described with reference to FIGS. 11 to 13.

Each control operation of a control method of the display device 100 may be operations performed by each of modules included in the display device 100 or performed by the controller 120.

In addition, each control operation of a control method of the server 200 may be operations performed by each of modules included in the server 200 or performed by the controller 220.

Referring to FIG. 11, the display device 100 may operate a control program (S 1130). The control program may be operated because the display device 100 may directly detect an abnormal operation (YES of S 1110) or because an input of a parameter request mode may be received from a user (YES of S 1120).

When the control program is operated (S 1130) the display device 100 may encrypt state information of each module included in the display device 100 (S 1140). This is in order that the stability and the security of the state information may be secured.

The display device 100 may transmit encrypted state information to the server 200 via a network.

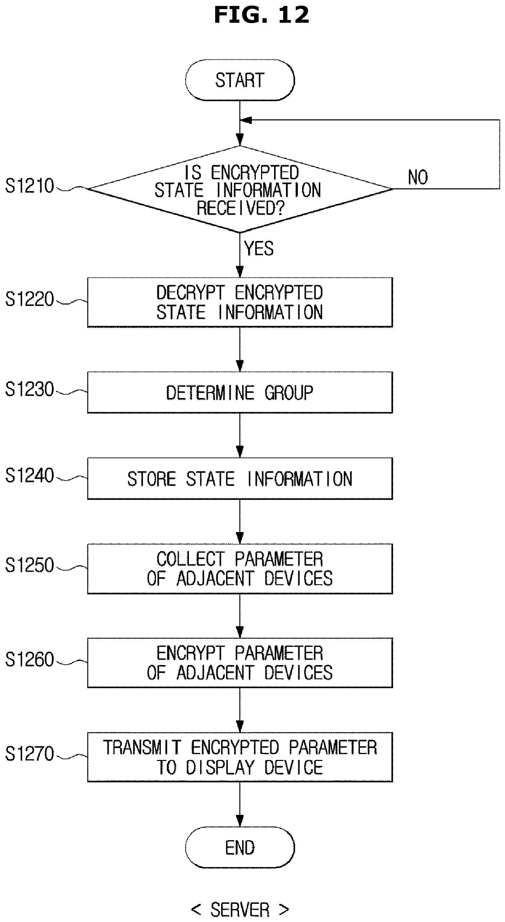

Referring to FIG. 12, the server 200 may receive the encrypted state information from the display device 100 (YES of S 1210), and may decrypt the encrypted state information (S 1220). The display device 100 may determine a group of the display device 100 based on the received stat information (S 1230). For example, the display device 100 may determine a group of the display device 100 by using an area where the display device 100 is placed, or a model of the display device 100.

The server 200 may store the received stat information (S 1240), and may collect a parameter of adjacent devices stored in the storage 250 (S 1250). In this case, the server 200 may receive a parameter, which is pre-set in the adjacent devices, from the server 200, and may store the parameter.

The server 200 may encrypt the collected parameter of the adjacent devices (S 1260), and may transmit the encrypted parameter to the display device 100. In this case, the parameter may be in plural, and the server 200 may transmit information of the adjacent devices and the parameter set in the adjacent devices, together.

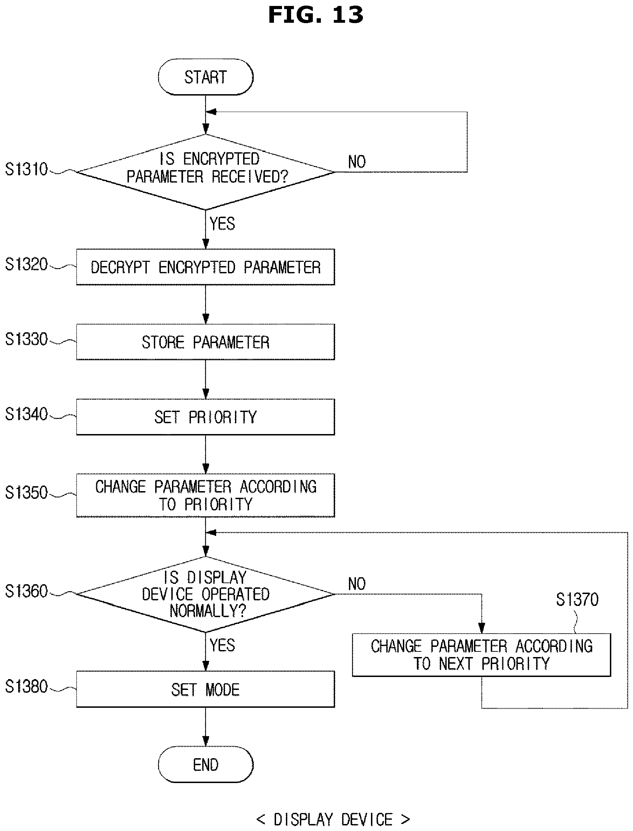

Referring to FIG. 13, when the display device 100 receives the encrypted parameter from the server 200 (YES of S 1310), the display device 100 may decrypt the encrypted parameter (S 1320). The display device 100 may store the parameter (S 1330). In this case, the display device 100 may receive information of the adjacent devices and the parameter set in the adjacent devices together, may store the information of the adjacent devices and the parameter set in the adjacent devices in a shape of a table.

The display device 100 may set priority of each parameter (S 1340). In this case, the display device 100 may set a parameter having a high frequency to a high priority.

The display device 100 may change a mode of each module according to priority (S1350). That is, the display device 100 may change a mode of each module of the display device 100 based on mode information about one or more modules indicated by a parameter having the first priority (S 1350).

The display device 100 may determine whether each module is normally operated (S1360), and when operated normally (YES of S1360) the display device 100 may set a mode of each module according to mode information of parameter having the first priority (S1380).

However, when operated abnormally (NO of S 1360), the display device 100 may change a mode of each module according to mode information of parameter having the second priority (S 1370).

In this case, the display device 100 may determine whether each module is normally operated (S 1360), and when operated normally (YES of S 1360) the display device 100 may set a mode of each module according to mode information of parameter having the second priority (S 1380).

However, when operated abnormally (NO of S 1360), the display device 100 may change a mode of each module according to mode information of parameter having the third priority (S 1370).

As mentioned above, the display device 100 may change sequentially a mode of each module according to priority, and may set a mode operated normally to a mode of each module.

According to a mode setting by the control method, a circuit feature of the display device 100,2378 such as Carrier Recovery (CR) feature, Symbol Timing Recover (STR) feature, phase variation recovery feature and loop filter feature, may be optimized.

Meanwhile, in above-mentioned embodiments, the display device 100 is described to set priority of each parameter, but is not limited thereto. The server 200 may set priority of each parameter and may transmit a plurality of parameters where priority is set, to the display device 100. As mentioned above, when the display device 100 receives a plurality of parameters where priority is pre-set, from the server 200, the above mentioned operation of setting priority (S1340) may be omitted.

As is apparent from the above description, according to the proposed display device, server, and control method of the display device, by applying a parameter of another display device, which is included in the same group, to the display device, setting of one or more modules may be completed without individual setting a mode of each module.

By using the proposed display device, server, and control method of the display device, by acquiring mode information about one or more modules from the parameter of the adjacent devices, a mode setting, which is optimized according to the current state of the display device, may be completed.

Although a few embodiments of the present invention have been shown and described, it would be appreciated by those skilled in the art that changes may be made in these embodiments without departing from the principles of the invention, the scope of which is defined in the claims.

## Claims

1. A display device comprising:
one or more modules each configured to operate according to one or more modes;
a communication interface (150,210) configured to transmit state information of the one or more modules to a server (200) or to an adjacent device (100-2 to 100-6), and configured to receive, from the adjacent device (100-2 to 100-6) via the server (200) or from the adjacent device (100-2 to 100-6), a parameter based on the transmitted state information, the parameter indicating a mode of one or more modules of the adjacent device (100-2 to 100-6); and
a controller (120,220) configured:
to change a mode of the one or more modules to correspond to a first mode indicated by a parameter having a first priority,
to determine whether the display device (100) is operating normally in the first mode,
in the event that the display device (100) is operating normally, to continue to operate the one or more modules in the first mode, and
in the event that the display device (100) is not operating normally, to change the mode of the one or more modules to correspond to a second mode indicated by a parameter having the next-highest priority.

2. The display device of claim 1, wherein the controller (120,220) is configured to set the priority of the parameter or the priority is pre-set from the server (200).

3. The display device of claim 1 or 2, wherein the adjacent device (100-2 to 100-6) represents one of a plurality of display devices located in a same area as the display device (100) or which is the same model as the display device (100).

4. The display device of any one of the preceding claims, wherein the controller (120,220) is configured to set the priority of the parameter according to the reception frequency of the parameter and to set a high priority when the parameter has a high reception frequency.

5. The display device of any one of the preceding claims, wherein the communication interface (150,210) is configured to receive the parameter having a priority.

6. The display device of any one of the preceding claims, further comprising:
an encryption unit (130,230) configured to encrypt the state information, and the communication interface (150,210) is configured to transmit the encrypted state information.

7. The display device of any one of the preceding claims, further comprising:
a decryption unit (140,240) configured to decrypt the parameter received by the communication interface (150,210) when the parameter is encrypted.

8. The display device of any one of the preceding claims, wherein the communication interface (150,210) is configured to transmit the state information when the controller (120,220) determines that the display device (100) is not operating normally.

9. The display device of any one of the preceding claims, further comprising:
a storage (160,250) configured to store a plurality of parameters indicating one or more modes of one or more modules, wherein the display device (100) shares the plurality of parameters with the server (200).

10. A control method of a display device, the control method comprising:
transmitting state information of one or more modules included in the display device (100) to a server (200) or to an adjacent device (100-2 to 100-6);
receiving a parameter based on the transmitted state information indicating a mode of one or more modules of the adjacent device (100-2 to 100-6) from the adjacent device via a server (200) or from the adjacent device (100-2 to 100-6);
changing a mode of the one or more modules to correspond to a first mode based on a parameter having a first priority;
determining whether the display device (100) is operating normally;
in the event that the display device (100) is operating normally, setting the mode of the one or more modules as the first mode, and;
in the event that the display device (100) is not operating normally, changing the mode of the one or more modules according based on a parameter having the next-highest priority.

## Patentansprüche

1. Anzeigegerät, das Folgendes umfasst:
ein oder mehrere Module, jeweils konfiguriert zum Arbeiten in einem oder mehreren Modi;
eine Kommunikationsschnittstelle (150, 210), konfiguriert zum Übertragen von Zustandsinformationen über die ein oder mehreren Module zu einem Server (200) oder zu einem benachbarten Gerät (100-2 bis 100-6) und konfiguriert zum Empfangen, von dem benachbarten Gerät (100-2 bis 100-6) über den Server (200) oder von dem benachbarten Gerät (100-2 bis 100-6), eines Parameters auf der Basis der übertragenen Zustandsinformationen, wobei der Parameter einen Modus von einem oder mehreren Modulen des benachbarten Geräts (100-2 bis 100-6) anzeigt; und
eine Steuerung (120, 220), konfiguriert zum:
Wechseln eines Modus der ein oder mehreren Module, so dass er einem ersten Modus entspricht, der von einem Parameter mit einer ersten Priorität angezeigt wird,
Feststellen, ob das Anzeigegerät (100) im ersten Modus normal arbeitet,
Fortsetzen, falls das Anzeigegerät (100) normal arbeitet, des Betriebs der ein oder mehreren Module im ersten Modus, und
Wechseln, falls das Anzeigegerät (100) nicht normal arbeitet, des Modus der ein oder mehreren Module, so dass er einem zweiten Modus entspricht, der von einem Parameter mit der nächsthöchsten Priorität angezeigt wird.

2. Anzeigegerät nach Anspruch 1, wobei die Steuerung (120, 220) zum Festlegen der Priorität des Parameters konfiguriert ist oder die Priorität vom Server (200) zuvor festgelegt wird.

3. Anzeigegerät nach Anspruch 1 oder 2, wobei das benachbarte Gerät (100-2 bis 100-6) eines von mehreren Anzeigegeräten repräsentiert, die sich in einem selben Bereich befinden wie das Anzeigegerät (100), oder das dasselbe Modell ist wie das Anzeigegerät (100).

4. Anzeigegerät nach einem der vorherigen Ansprüche, wobei die Steuerung (120, 220) zum Festlegen der Priorität des Parameters gemäß der Empfangsfrequenz des Parameters und zum Festlegen einer hohen Priorität konfiguriert ist, wenn der Parameter eine hohe Empfangsfrequenz hat.

5. Anzeigegerät nach einem der vorherigen Ansprüche, wobei die Kommunikationsschnittstelle (150, 210) zum Empfangen des Parameters mit einer Priorität konfiguriert ist.

6. Anzeigegerät nach einem der vorherigen Ansprüche, das ferner Folgendes umfasst:
eine Verschlüsselungseinheit (130, 230), konfiguriert zum Verschlüsseln der Zustandsinformationen, und die Kommunikationsschnittstelle (150, 210) ist zum Übertragen der verschlüsselten Zustandsinformationen konfiguriert.

7. Anzeigegerät nach einem der vorherigen Ansprüche, das ferner Folgendes umfasst:
eine Entschlüsselungseinheit (140, 240), konfiguriert zum Entschlüsseln des von der Kommunikationsschnittstelle (150, 210) empfangenen Parameters, wenn der Parameter verschlüsselt ist.

8. Anzeigegerät nach einem der vorherigen Ansprüche, wobei die Kommunikationsschnittstelle (150, 210) zum Übertragen der Zustandsinformationen konfiguriert ist, wenn die Steuerung (120, 220) feststellt, dass das Anzeigegerät (100) nicht normal arbeitet.

9. Anzeigegerät nach einem der vorherigen Ansprüche, das ferner Folgendes umfasst:
einen Speicher (160, 250), konfiguriert zum Speichern von mehreren Parametern, die einen oder mehrere Modi von einem oder mehreren Modulen anzeigen, wobei das Anzeigegerät (100) die mehreren Parameter mit dem Server (200) gemeinsam nutzt.

10. Steuerverfahren für ein Anzeigegerät, wobei das Steuerverfahren Folgendes beinhaltet:
Übertragen von Zustandsinformationen über ein oder mehrere in dem Anzeigegerät (100) enthaltene Module zu einem Server (200) oder zu einem benachbarten Gerät (100-2 bis 100-6);
Empfangen eines Parameters auf der Basis der übertragenen Zustandsinformationen, die einen Modus von einem oder mehreren Modulen des benachbarten Geräts (100-2 bis 100-6) anzeigen, von dem benachbarten Gerät über einen Server (200) oder von dem benachbarten Gerät (100-2 bis 100-6) ;
Wechseln eines Modus der ein oder mehreren Module, so dass er einem ersten Modus entspricht, auf der Basis eines Parameters mit einer ersten Priorität;
Feststellen, ob das Anzeigegerät (100) normal arbeitet;
Festlegen, falls das Anzeigegerät (100) normal arbeitet, des Modus der ein oder mehreren Module als den ersten Modus, und
Wechseln, falls das Anzeigegerät (100) nicht normal arbeitet, des Modus der ein oder mehreren Module auf der Basis eines Parameters mit der nächsthöchsten Priorität.

## Revendications

1. Dispositif d'affichage comprenant :
un ou plusieurs modules configurés chacun pour fonctionner suivant un ou plusieurs modes ;
une interface de communication (150, 210) configurée pour transmettre des informations d'état desdits un ou plusieurs modules à un serveur (200) ou à un dispositif adjacent (100-2 à 100-6) et configurée pour recevoir, depuis le dispositif adjacent (100-2 à 100-6) par l'intermédiaire du serveur (200) ou depuis le dispositif adjacent (100-2 à 100-6), un paramètre basé sur les informations d'état transmises, le paramètre indiquant un mode d'un ou plusieurs modules du dispositif adjacent (100-2 à 100-6) ; et
un contrôleur (120, 220) configuré :
pour changer un mode desdits un ou plusieurs modules pour correspondre à un premier mode indiqué par un paramètre ayant une première priorité,
pour déterminer si le dispositif d'affichage (100) fonctionne normalement dans le premier mode,
dans le cas où le dispositif d'affichage (100) fonctionne normalement, pour continuer à faire fonctionner lesdits un ou plusieurs modules dans le premier mode, et
dans le cas où le dispositif d'affichage (100) ne fonctionne pas normalement, pour changer le mode desdits un ou plusieurs modules pour correspondre à un deuxième mode indiqué par un paramètre ayant la priorité immédiatement la plus élevée.

2. Dispositif d'affichage selon la revendication 1, dans lequel le contrôleur (120, 220) est configuré pour fixer la priorité du paramètre ou la priorité est préfixée à partir du serveur (200).

3. Dispositif d'affichage selon la revendication 1 ou la revendication 2, dans lequel le dispositif adjacent (100-2 à 100-6) représente l'un d'une pluralité de dispositifs d'affichage situés dans une même zone que le dispositif d'affichage (100) ou qui est du même modèle que le dispositif d'affichage (100).

4. Dispositif d'affichage selon l'une quelconque des revendications précédentes, dans lequel le contrôleur (120, 220) est configuré pour fixer la priorité du paramètre en fonction de la fréquence de réception du paramètre et pour fixer une priorité élevée lorsque le paramètre a une fréquence de réception élevée.

5. Dispositif d'affichage selon l'une quelconque des revendications précédentes, dans lequel l'interface de communication (150, 210) est configurée pour recevoir le paramètre ayant une priorité.

6. Dispositif d'affichage selon l'une quelconque des revendications précédentes, comprenant en outre :
une unité de cryptage (130, 230) configurée pour crypter les informations d'état, et l'interface de communication (150, 210) est configurée pour transmettre les informations d'état cryptées.

7. Dispositif d'affichage selon l'une quelconque des revendications précédentes, comprenant en outre :
une unité de décryptage (140, 240) configurée pour décrypter le paramètre reçu par l'interface de communication (150, 210) lorsque le paramètre est crypté.

8. Dispositif d'affichage selon l'une quelconque des revendications précédentes, dans lequel l'interface de communication (150, 210) est configurée pour transmettre les informations d'état lorsque le contrôleur (120, 220) détermine que le dispositif d'affichage (100) ne fonctionne pas normalement.

9. Dispositif d'affichage selon l'une quelconque des revendications précédentes, comprenant en outre :
un stockage (160, 250) configuré pour stocker une pluralité de paramètres indiquant un ou plusieurs modes d'un ou plusieurs modules, dans lequel le dispositif d'affichage (100) partage la pluralité de paramètres avec le serveur (200).

10. Procédé de commande d'un dispositif d'affichage, le procédé de commande comprenant :
la transmission d'informations d'état d'un ou plusieurs modules inclus dans le dispositif d'affichage (100) à un serveur (200) ou à un dispositif adjacent (100-2 à 100-6) ;
la réception d'un paramètre basé sur les informations d'état transmises indiquant un mode d'un ou plusieurs modules du dispositif adjacent (100-2 à 100-6) à partir du dispositif adjacent par l'intermédiaire d'un serveur (200) ou à partir du dispositif adjacent (100-2 à 100-6) ;
le changement d'un mode desdits un ou plusieurs modules pour correspondre à un premier mode basé sur un paramètre ayant une première priorité ;
la détermination si le dispositif d'affichage (100) fonctionne normalement ;
dans le cas où le dispositif d'affichage (100) fonctionne normalement, la fixation du mode desdits un ou plusieurs modules en tant que premier mode ; et
dans le cas où le dispositif d'affichage (100) ne fonctionne pas normalement, le changement du mode desdits un ou plusieurs modules sur la base d'un paramètre ayant la priorité immédiatement la plus élevée.
